# EUROPEAN PATENT APPLICATION

(11) **EP 3 101 532 A1**
(43) Date of publication of application: **07.12.2016**
(21) Application number: 16162643.7
(22) Date of filing: 29.03.2016
(51) Int. Cl.: G06F 3/14, H04N 21/462

(54) **DISPLAY DEVICE AND METHOD OF CONTROLLING THE SAME**

(30) Priority: 02.06.2015 KR 20150078202
(71) Applicant: Samsung Electronics Co., Ltd., Gyeonggi-do 16677 (KR)
(72) Inventor: CHO, Eun-joo, Hwaseong-si (KR); YOO, Soung-min, Suwon-si (KR); LEE, Yu-kyoung, Seoul (KR); CHOI, Eun-young, Suwon-si (KR)
(74) Representative: Appleyard Lees IP LLP

(57) **Abstract**

A method of controlling a display device is provided. The display device includes a communicator configured to establish a connection with a first mobile device and a second mobile device of a plurality of mobile devices; a display configured to display an image; an audio output interface configured to output audio; and a processor configured to control the communicator to establish a first communication connection with the first mobile device and a second communication with the second mobile device, receive first information regarding a first plurality of media content from first mobile device and second information regarding a second plurality of media content from the second mobile device; control the display to display a combined list of the first plurality of media content and the second plurality of media content based on the first information and the second information from the first mobile device and the second mobile device; and control the audio output interface to output content included in the combined list.

## Description

### CROSS-REFERENCE TO RELATED APPLICATION

This application claims priority from Korean Patent Application No. 10-2015-0078202, filed on June 2, 2015 in the Korean Intellectual Property Office, the disclosure of which is incorporated herein by reference in its entirety.

### BACKGROUND

### Field

Apparatuses and methods consistent with exemplary embodiments relate to a display device and a method of controlling the display device, and more particularly, to a display device providing information regarding music contents received by a plurality of mobile devices connected to the display device in a unified list, and a method of controlling the display device.

### Description of Related Art

Recent display devices provide a variety of functions and information. As communication technology has developed, because various electronic devices are not only independently used, but also are connected to each other over various wired and wireless networks, it has become possible to mutually control the electronic devices. In particular, a display device, such as a TV, and user mobile devices, such as a cellular phone, may be connected to each other over wired and wireless networks, making it possible for users to perform display device control operations using mobile devices.

However, because only a single mobile device can be connected to the display device, it is impossible to simultaneously connect a plurality of mobile devices to a display device.

### SUMMARY

Exemplary embodiments overcome the above disadvantages and other disadvantages not described above. Also, exemplary embodiments are not required to overcome the disadvantages described above, and an exemplary embodiment may not overcome any of the problems described above.

According to an aspect of an exemplary embodiment, there is provided a method of controlling a display device, the method including: establishing a connection with a first mobile device and a second mobile device of a plurality of mobile devices; receiving first information regarding a first plurality of media content from the first mobile device and second information regarding a second plurality of media content from the second mobile device; generating a combined list of the first plurality of media content and the second plurality of media content based on the first information and the second information received from the first mobile device and the second mobile device; displaying the generated combined list; and individually reproducing content included in the combined list.

The first information may correspond to first music content and the second information may correspond to second music content.

The performing of communication connection with the first mobile device and the second mobile device may include displaying a PIN number; and in response to receiving the PIN number from the first mobile device, establishing the connection with the first mobile device, and in response to receiving the PIN number from the second mobile device, establishing the connection with the second mobile device.

The reproducing of the music content may include, in response to a communication connection error of the first mobile device, reproducing subsequent music content and deleting music content received from the first mobile device having the communication connection error from the combined list.

The method may further include, in response to the first mobile device being connected, displaying a GUI corresponding to the first mobile device, and wherein the GUI may include at least one of text, an icon, a picture, and a photo.

The combined list may include at least one among a title, a singer, an album name, and information indicating a source mobile device.

The reproducing may further include: displaying a screen corresponding to a currently reproduced music content.

The method may further include in response to receiving an edit command , updating the combined list according to the edit command.

The may further include: receiving a user command to set a mode; and transmitting information indicating the mode to the plurality of mobile devices, and the plurality of mobile devices may display recommended content based on the information regarding the set mode.

The method may further include: in response to a third mobile device being connected during reproduction of the content, displaying a guide UI in a pop up form.

According to an aspect of another exemplary embodiment, there is provided a display device including: a communicator configured to establish a connection with a first mobile device and a second mobile device of a plurality of mobile devices; a display configured to display an image; an audio output interface configured to output audio; and processor configured to: control the communicator to establish a first communication connection with the first mobile device and a second communication connection with the second mobile device, receive first information regarding a first plurality of media content from the first mobile device and second information regarding a second plurality of media content from the second mobile device; control the display to display a combined list of the first plurality of media content and the second plurality of media content based on the first information and the second information from the first mobile device and the second mobile device; and control the audio interface to output content included in the combined list.

The first information may correspond to first music content.

The processor may be further configured to control the display to display a PIN number, and in response to receiving the PIN number from the first mobile device, control the communicator to establish the first communication connection with the first mobile device, and in response to receiving the PIN number from the second mobile device, establish the second connection with the second mobile device.

The processor may be further configured to, in response to a communication connection error of the first mobile device, reproduce subsequent music content from the combined list and delete the first plurality of music contents from the combined list.

The processor may be further configured to, in response to the first mobile device being connected, control the display to display a GUI corresponding to the first mobile device, and the GUI may include at least one of text, an icon, a picture, and a photo.

The list may include at least one among a title, a singer, an album name, and information indicating a source mobile device.

The processor may be further configured to control the display to display a screen corresponding to a currently reproduced music content.

The processor may be further configured to, in response to receiving an edit command, update the combined list according to the edit command and control the display to display the updated combined list.

The processor may be further configured to, in response to receiving a user command to set a mode, control the communicator to transmit information indicating the mode to the plurality of mobile devices, and the plurality of mobile devices may be configured to display recommended content based on the information regarding the set mode.

The processor may be further configured to, in response to a third mobile device being connected during reproduction of the content, control the display portion display a guide UI in a pop up form.

According to an aspect of still another exemplary embodiment, there is provided a method of operating a display device configured to communicably connect to a first mobile device and a second mobile device, the display device including a display and a communicator, the method including: receiving a first connection request from the first mobile device; authenticating the first mobile device; establishing a first connection between the display device and the first mobile device in response to the authenticating the first mobile device; receiving a first media information from the first mobile device via the first connection; creating a first media list based on the received first media information; receiving a second connection request from the second mobile device; authenticating the second mobile device; establishing a second connection between the display device and the second mobile device in response to the authenticating the second mobile device; receiving a second media information from the second mobile device via the second connection; creating a combined media list comprising a plurality of media items corresponding to the received first media information and the received second media information; and individually reproducing the plurality of media items.

The authenticating the first mobile device may include: displaying, in response to the received first connection request, a first PIN code on the display; receiving a first received PIN code from the first mobile device; and authenticating the first mobile device by determining whether the first received PIN code is the PIN code.

The authenticating the second mobile device may include: displaying, in response to the received second connection request, a second PIN code on the display; receiving a second received PIN code from the second mobile device; and authenticating the second mobile device by determining whether the second received PIN code is the second PIN code.

The method may further include: receiving a list edit command from one among the first mobile device and the second mobile device; and updating the combined list based on the received list edit command.

Additional and/or other aspects and advantages of the invention will be set forth in part in the description which follows and, in part, will be obvious from the description, or may be learned by practice of the invention.

### BRIEF DESCRIPTION OF THE DRAWINGS

The above and/or other aspects will be more apparent by describing exemplary embodiments with reference to the accompanying drawings, in which:
FIG. 1 is a diagram of a display system, according to an exemplary embodiment;
FIG. 2 is a block diagram of a display device, according to an exemplary embodiment;
FIG. 3 is a detailed block diagram of a display device, according to an exemplary embodiment;
FIGS. 4, 5A, 5B, 6-9, 10A, 10B, 11A, 11B, 11C and 11D are diagrams for describing a method of using a function of a display device, according to various exemplary embodiments;
FIG. 12 is a diagram of a mobile device, according to an exemplary embodiment;
FIG. 13 is a flowchart for describing a method of using a function of a display device, according to an exemplary embodiment; and
FIG. 14 is a sequence diagram for describing a method of controlling a display device, according to an exemplary embodiment.

### DETAILED DESCRIPTION OF EXEMPLARY EMBODIMENTS

As the present disclosure allows for various changes and numerous exemplary embodiments, particular exemplary embodiments will be illustrated in the drawings and described in detail in the written description. However, this is not intended to limit the present disclosure to particular modes of practice, and it is to be appreciated that all changes, equivalents, and substitutes that do not depart from the spirit and technical scope of the present disclosure are encompassed by the present disclosure. In the description, certain detailed explanations of related art are omitted when it is deemed that they may unnecessarily obscure the essence of the present disclosure.

It will be understood that although the terms "first," "second," etc. may be used herein to describe various components, these components should not be limited by these terms. These components are only used to distinguish one component from another.

The terminology used herein is for the purpose of describing particular exemplary embodiments only and is not intended to be limiting of exemplary embodiments. As used herein, the singular forms "a," "an," and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

In the exemplary embodiments, terms such as "module" or "unit" may be implemented by hardware or software, or by a combination of hardware and software. Terms ,such as a plurality of "modules" or a plurality of "units," may be integrated into at least one module, and may be implemented by at least one processor.

Hereinafter, exemplary embodiments will be described in detail with reference to the accompanying drawings, in which like or corresponding elements are denoted by like reference numerals throughout and are not redundantly described here.

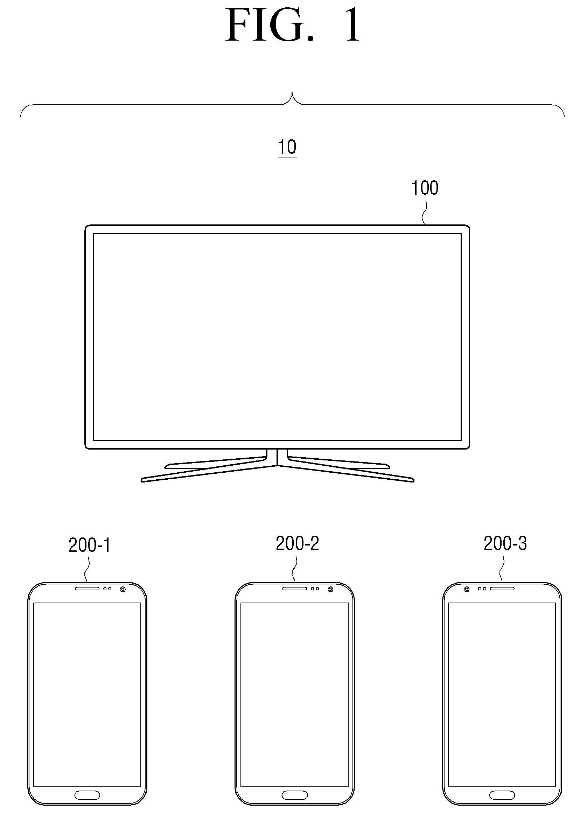

FIG. 1 is a diagram of a display system 10, according to an exemplary embodiment. As shown in FIG. 1, the display system 10 may include a display device 100, a first mobile device 200-1, a second mobile device 200-2, and a third mobile device 200-3. The display device 100 may be a digital TV, but this is merely an example. The display device 100 may be implemented as various display devices such as a tablet personal computer (PC), a desk PC, a monitor, a projector, etc. A mobile device 200 may be implemented as an electronic device such as a smart phone, a personal digital assistant (PDA), a smart watch, etc.

The display device 100 may display a guide user interface (UI) guiding a method of connecting the display device 100 to the mobile device 200. The guide UI may be provided, and thus the display device 100 may allow a user to easily connect the mobile device 200 to the display device 100. If a connection command is input by a user of the mobile device 200, the mobile device 200 may request communication connection to the display device 100.

If a communication connection request of the mobile device 200 is received, the display device 100 may display a PIN number.

If the PIN number is input to the mobile device 200, the display device 100 may establish a communication connection. If the display device 100 and the mobile device 200 are completely connected, the display device 100 may output a UI indicating connection completion. In more detail, the display device 100 may display a GUI including a connection completion phrase and may output an AUI notifying connection completion.

If the display device 100 and the mobile device 200 are connected, the display device 100 may provide information regarding the connected mobile device 200. In more detail, the display device 100 may display a UI including information regarding the connected mobile device 200 and may output audio information regarding the connected mobile device 200. In this regard, the information regarding the mobile device 200 may include a name of the mobile device 200, a user title input and updated by the user, a picture, a photo, and a combination thereof. The user may decide the user title and input the user title, thereby a plurality of mobile devices may be identified.

If the plurality of mobile devices 200-1, 200-2, and 200-3 are connected to the display device 100, each of the mobile devices 200-1, 200-2, and 200-3 may transmit information regarding contents to the display device 100 according to a user command. In this regard, contents may be implemented as music contents, image contents, photo contents, etc. When the contents are the music contents, information regarding the music contents may include a title of the music contents, a singer, an album name, lyrics, address information for reproducing the music contents (e.g., URL information), etc. Each of the mobile devices 200-1, 200-2, and 200-3 may transmit information regarding at least one of music contents stored in the mobile device 200, music contents stored in a cloud server connected to the mobile device 200, and music contents stored in an external server to the display device 100. In particular, when information regarding the music contents stored in the mobile device 200 is transmitted to the display device 100, the mobile device 200 may transmit not only the information regarding the music contents, but also audio data of the music contents. When the mobile device 200 is connected to the cloud server, the mobile device 200 may transmit information regarding the music contents stored in the cloud server to the display device 100. The mobile device 200 may transmit information (e.g., URL information, etc.) regarding music contents stored in the external server or the Internet to the display device 100 according to a user command.

The display device 100 may receive the information regarding the music contents from the mobile device 200. The display device 100 may receive data regarding the music contents from the mobile device 200. The display device 100 may generate a list including the music contents received from the plurality of mobile devices 200-1, 200-2, and 200-3 based on the received information regarding the music contents and audio data regarding the music contents. In this regard, the list may include information regarding music contents received from the plurality of mobile devices 200-1, 200-2, and 200-3 and may uniformly provide, information regarding a title of the music contents, a singer, an album name, and a mobile device transmitting the information. The music contents included in the list may include not only the music contents stored in the mobile device 200, but also the music contents stored in the cloud server connected to the mobile device 200, the music contents stored in the external server, etc. As described above, the display device 100 may display the music contents received from the plurality of mobile devices 200 as a list, allows a display device to provide music contents users of the plurality of mobile devices 200-1, 200-2, and 200-3 desire to listen.

The display device 100 may provide a plurality of pieces of music contents included in the generated list. In this regard, the display device 100 may reproduce the music contents by using audio data of the music contents received from the plurality of mobile devices 200-1, 200-2, and 200-3 and may reproduce the music contents by using address information for reproducing the music contents (for example, URL information). In more detail, the display device 100 may use information regarding the music contents, such as an URL address, to receive audio data of the music contents through an external cloud server or a storage device, and reproduce the music contents. For example, when the audio data of the music contents received from the mobile device 200 is an mp3 file, the display device 100 may reproduce the music contents by using the mp3 file received from the mobile device 200.

During reproduction of the music contents, the display device 100 may simultaneously display a screen corresponding to other music contents based on a genre, a tempo, etc. of the music contents being reproduced. The display device 100 may display the screen corresponding to the music contents, thereby providing a user with a visual effect to provide an effect of expanding a music reproduction experience to multiple senses.

During the reproduction of the music contents, if a list edit command is input to the mobile device 200, the mobile device 200 may transmit the list edit command to the display device 100.

If the list edit command is received, the display device 100 may edit and update the list according to the list edit command. In more detail, during the reproduction of the music contents, if a music add or delete command is received from the mobile device 200, the display device 100 may update the list by adding or deleting music corresponding to the music add or delete command to or from the list.

If the display device 100 receives a communication connection request of a new mobile device during the reproduction of the music contents, the display device 100 may display a guide UI in a pop up form. Thus, the display device 100 may guide connection of the additional mobile device 200 through the guide UI.

If a reproduction error occurs when the display device 100 reproduces the music content, the display device 100 may determine what caused the reproduction error. In more detail, the display device 100 may determine whether the reproduction error is a communication error of the mobile device 200 that transmits the music contents in which the reproduction error occurred or is a reproduction error caused by corruption of the corresponding music contents. If the reproduction error is the communication error of the mobile device 200, the display device 100 may automatically skip to music contents received from another normally connected mobile device to reproduce the music contents. If the reproduction error is the reproduction error caused by corruption of the corresponding music contents, the display device 100 may automatically skip to subsequent music contents. If the reproduction error is the communication error of the mobile device 200, the display device 100 may delete all music contents received from the mobile device 200 that transmitted the music contents from the list. If the reproduction error is the reproduction error caused by corruption of the corresponding music contents, the display device 100 may delete the corresponding music contents.

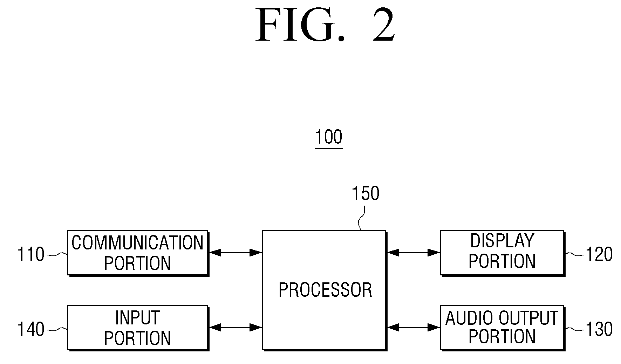

FIG. 2 is a block diagram of a configuration of the display device 200, according to an exemplary embodiment. As shown in FIG. 2, the display device 100 may include a communication portion 110 (communicator), a display portion 120 (display), an audio output portion 130 (audio output interface), an input portion 140 (input interface), and a processor 150.

The communication portion 110 may communicate with the mobile device 200. In particular, the communication portion 110 may communicably connect to the mobile device 200, and, if a command to transmit information regarding music contents is input by a user through the connected mobile device 200, receive information regarding the music contents. The communication portion 110 may receive audio data of the music contents along with the information regarding the music contents.

If a mode setting is input by the user through the input portion 140, the communication portion 110 may transmit information regarding the set mode to the mobile device 200. The communication portion 110 may receive a list edit command by the user from the mobile device 200.

The display portion 120 may output image data under control of the processor 150. In particular, the display portion 120 may display a guide UI guiding a method of connecting the display device 100 and the mobile device 200, and, if the display device 100 and the mobile device 200 are connected to each other, may display identification information indicating the connected mobile device 200. If the communication portion 110 receives the information regarding the music contents from the plurality of connected mobile devices 200 connected to the display device 100, the display portion 120 may display a list including the received information regarding the music contents.

The audio output portion 130 may output the audio data under control of the processor 150. In particular, the audio output portion 130 may reproduce the music contents of the list including the received music contents based on the information regarding the music contents received from the mobile device 200 connected to the display device 100. If an error occurs during reproduction of the music contents, when the error is a communication error of the mobile device 200 that transmits the music contents in which the reproduction error occurs, the audio output portion 130 may reproduce the music contents received from the normally connected mobile device 200. If the error is a reproduction error caused by corruption of the corresponding music contents, the audio output portion 130 may reproduce subsequent music contents. The input portion 140 may receive a user command for controlling the display device 100. While the display portion 120 displays the list, the input portion 140 may include a remote controller, a keyboard, a mouse, a microphone, a motion sensor, etc. for receiving a movement command and a selection command, which may be used for controlling reproduction of the music contents or editing the list. The user command may be a voice command or a motion command. For example, the input portion 140 may receive a command for setting a mode, such as a party mode or another mode, through the voice command or the motion command.

The processor 150 may control an operation of the display device 100 according to the user command received through the communication portion 110. In particular, the processor 150 may control the display portion 120 to unify and display the information regarding music contents received from the plurality of mobile devices 200 connected to the display device 100 through the communication portion 110 as a list.

In more detail, the processor 150 may control the display portion 120 to display the guide UI guiding the method of connecting the display device 100 and the mobile device 200. If the communication portion 110 receives a signal requesting a communication connection from the mobile device 200, the processor 150 may control the display portion 120 to display a PIN number. If the displayed PIN number is input to the mobile device 200, the processor 150 may control the communication portion 110 to establish a communication connection.

The processor 150 may control the display portion 120 to display the identification information for identifying the connected mobile device 200. In this regard, the identification information may include one or more among a name of a mobile device, a user title input by the user, a picture, a photo, audio, and a combination thereof.

The processor 150 may control the communication portion 110 to receive the information regarding the music contents from the plurality of connected mobile devices 200. The processor 150 may control the display portion 120 to display the list including the received music contents based on the information received from the plurality of mobile devices 200.

If a user command to reproduce the music contents included in the list is input through the input portion 140, the processor 150 may control the audio output portion 130 to reproduce the music contents. During the reproduction of the music contents through the audio output portion 130, the processor 150 may control the display portion 120 to display a screen indicating a corresponding feature of the music contents such as a genre of the music contents being reproduced, a tempo, etc. In this regard, the screen may include an equalizer screen. The processor 150 may control the display portion 120 to display the identification information of the mobile device 200 or the list on the equalizer screen. In this regard, an equalizer may be automatically selected by the display device 100 or may be set by the user, and may have various configurations. The equalizer screen may be configured as image contents received from the plurality of mobile devices 200.

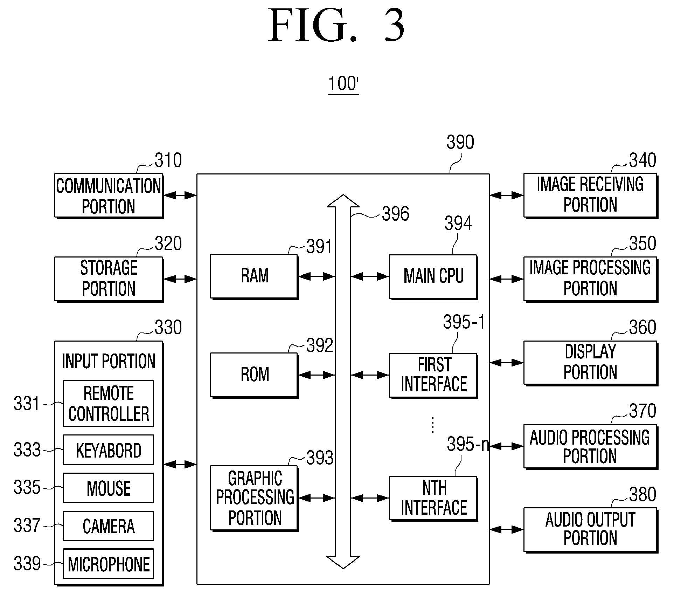

FIG. 3 is a detailed block diagram of a configuration of the display device 100, according to an exemplary embodiment. As shown in FIG. 3, the display device 100' according to an exemplary embodiment may include a communication portion 310, a storage portion 320, an input portion 330, an image receiving portion 340, an image processing portion 350, a display portion 360, an audio processing portion 370, an audio output portion 380, and a processor 390.

The communication portion 310 may communicate with the mobile device 200. In particular, the communication portion 310 may communicate with the mobile device 200 by using a WiFi communication method and may communicate with the mobile device 200 by using various wireless communication methods such as a Bluetooth communication method, a Zigbee communication method, an infrared communication method, a digital living network appliance (DLNA), an airplay communication method, etc.

In this regard, the Bluetooth communication method and the WiFi communication method may respectively use a Bluetooth chip and a WiFi chip to communicate with the mobile device 200. When the WiFi communication chip or the Bluetooth communication chip is used, various types of connection information, such as an SSID and a session key, etc., may be first transmitted and received and may be used to establish communication, and then various information may be transmitted and received. Other wireless communication methods may include various methods such as IEEE, 3^{rd} Generation (3G), 3^{rd} Generation Partnership Project (3GPP), Long Term Evolution (LTE), Bluetooth Low Energy (BLE), etc.

When the Bluetooth communication method is used, the communication portion 310 may receive a communication connection request signal from the mobile device 200. The communication portion 310 may transmit a communication connection response signal and communicate with the mobile device 200. The above-described exemplary embodiment describes a case in which the display device 100 previously performed a pairing operation with the mobile device 200. When the display device 100 and the mobile device 200 have not previously been paired by a pairing operation, the communication portion 310 may perform the pairing operation with the mobile device 200.

When the BLE communication method is used, the communication portion 310 may detect a BLE signal of the mobile device 200 and may transmit a communication connection request signal to the mobile device 200. In more detail, the communication portion 310 may detect a BLE signal to detect that the mobile device 200 approaches to a communication connectable distance and may transmit a signal requesting information for connection, such as the SSID, etc., to the approaching mobile device 200.

The storage portion 320 may store various modules for driving the display device 100. For example, the storage portion 320 may store software including a base module, a sensing module, a communication module, a presentation module, a web browser module, and a service module. In this regard, the base module may be a module for processing a signal transferred from each hardware element included in the display device 100 and transferring the signal to an upper layer module. The sensing module may be a module for collecting information from various sensors and analyzing and managing the collected information and may include a face recognition module, a voice recognition module, a motion recognition module, an NFC recognition module, etc. The presentation module may be a module for configuring a display screen and may include a multimedia module for reproducing and outputting multimedia contents and a UI rendering module for performing UI and graphic processing. The communication module may be a module for performing communication. The web browser module may be a module for performing web browsing and accessing a web server. The service module may be a module including various applications for providing various services.

As described above, the storage portion 320 may include various program modules but some of various program modules may be omitted, modified, or added according to a type and a characteristic of the display device 100.

The input portion 330 may be an element receiving a user command for controlling an operation of the display device 100. In particular, the input portion 330 may receive a movement command and a selection command for editing and reproducing the list including the received information regarding the music contents based on the information regarding the music contents received from the mobile device 200.

The input portion 330 may be implemented as various input devices such as a remote controller 331, a keyboard 333, a mouse 335, a camera 337, a microphone 339, etc. as shown in FIG. 3.

The image processing portion 350 may be an element performing processing on the image data received from the image receiving portion 340. The image processing portion 350 may perform various image processing such as decoding, scaling, noise filtering, frame rate conversion, resolution conversion, etc. on the image data.

The display portion 360 may display at least one of a video frame processed by the image processing portion 350 and various screens generated by the graphic processing portion 393. In particular, the display portion 360 may display a guide UI guiding a communication connection method of the display device 100 and the mobile device 200 and may display the list including the received music contents based on the information regarding the music contents received from the connected mobile device 200. The display portion 360 may display a pointer or a highlight for editing the list and reproducing the music contents.

The audio processing portion 370 may be an element for processing the audio data. The audio processing portion 370 may perform various processing such as decoding, amplification, noise filtering, etc. on the audio data.

The audio output portion 380 may be an element for outputting various types of the audio data processed by the audio processing portion 370, as well as various alarm sound and voice messages.

The processor 390 may control the operation of the display device 100 by using various programs stored in the storage portion 320.

The processor 390 may include RAM 391, ROM 392, a graphic processing portion 393, a main CPU 394, first through nth interfaces 395-1 through 395-n, and a bus 396 as shown in FIG. 3. In this regard, the RAM 391, the ROM 392, the graphic processing portion 393, the main CPU 394, and the first through nth interfaces 3951 through 395-n may be connected to each other via the bus 396.

The ROM 392 may store a command set for system booting, etc. If a turn-on command is input and power is supplied, the main CPU 394 may copy an operating system (O/S) stored in the storage portion 320 to the RAM 391 according to commands stored in the ROM 392 and may execute the O/S to boot a system. If booting is complete, the main CPU 394 may copy various application programs stored in the storage portion 320 to the RAM 391 and may execute the application programs copied to the RAM 391 to perform various operations.

The graphic processing portion 393 may use an arithmetic operation portion and a rendering portion to generate a screen including various objects such as icons, images, text, etc. The arithmetic operation portion may use the control command received from the input portion 330 to calculate a property value, such as a coordinate value, a shape, a size, a color, etc., by which each object is to be displayed according to a layout of the screen. The rendering portion may generate various screens of various layouts including the objects based on the property value calculated by the arithmetic operation portion. The screen generated by the rendering portion may be displayed in a display region of the display portion 360.

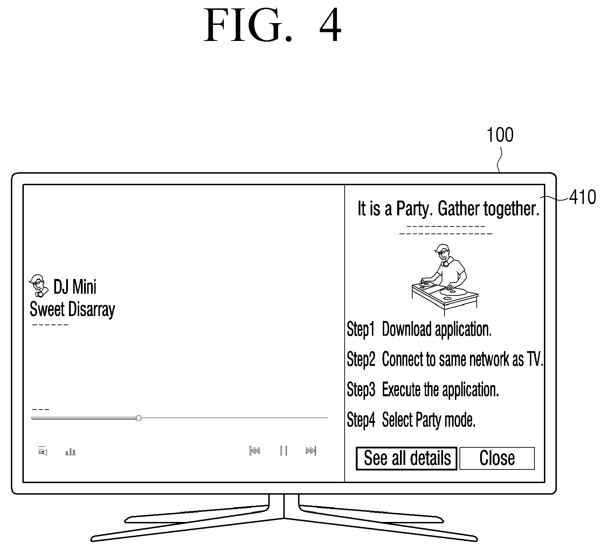

Hereinafter, a method of controlling the display device 100 for reproducing contents received from the plurality of mobile devices 200-1, 200-2, and 200-3 connected to the display device 100 according to various exemplary embodiments will now be described with reference to FIGS. 4, 5A, 5B, 6-9, 10A, 10B, 11A, 11B, 11C and 11D.

In more detail, if a party mode conversion command is input through the input portion 330, the processor 390 may control the display portion 360 to display a guide UI 410 guiding connection of the display device 100 and the mobile device 200, as shown in FIG. 4. For example, the guide UI 410 may include an application installation guide for executing a party mode, a communication connection setting guide, a PIN number input guide, and a party mode entrance guide.

In more detail, the guide UI 410 may include the following message as shown in FIG. 4:
Step 1. Download an application "smart view" in the mobile device 200.
Step 2. Set the mobile device 200 to use WiFi and connect the display device 100 via the same wireless network.
Step 3. Execute the application "smart view" in the mobile device 200, select the display device 100 from a connection list, and input a PIN number displayed on the display device 100 to the mobile device 200.
Step 4. Enter a "party mode" in the application "smart view".

The processor 390 may control the display portion 360 to display the guide UI 410 all the time. Further, if the guide UI 410 is not currently displayed and an additional mobile device 200 is connected during reproduction of contents, the processor 390 may control the display portion 360 to display the guide UI 410 in a pop up form.

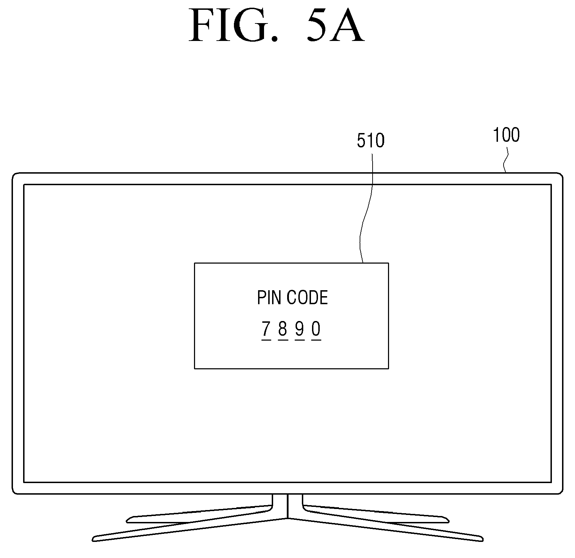

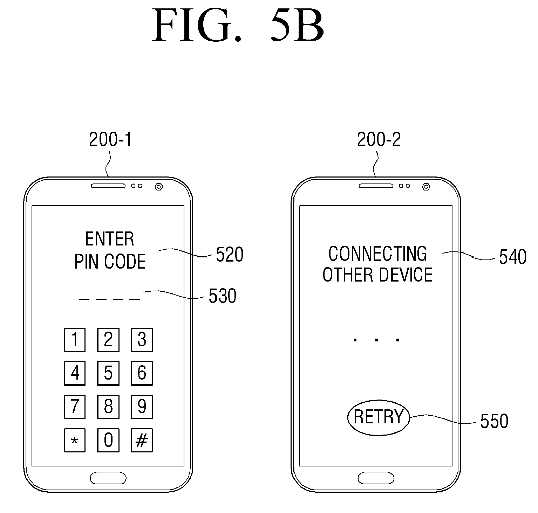

If a communication connection request signal is received, as shown in FIG. 5A, the processor 390 may control the display portion 360 to display a PIN number 510. The first mobile device 200-1 requesting a first communication connection may display a phrase 520 "Enter PIN Code," an interface 530 for receiving a PIN number, as shown in FIG. 5B. This allows the display device 100 to sequentially connect to mobile devices one by one. While the display device 100 communicates with the first mobile device 200-1 requesting the first communication connection, the second mobile device 200-2 may display a phrase 540 "connecting another device" and a retry button 550. The above-described process may be repeatedly performed until both the mobile devices 200-1 and 200-2 are connected.

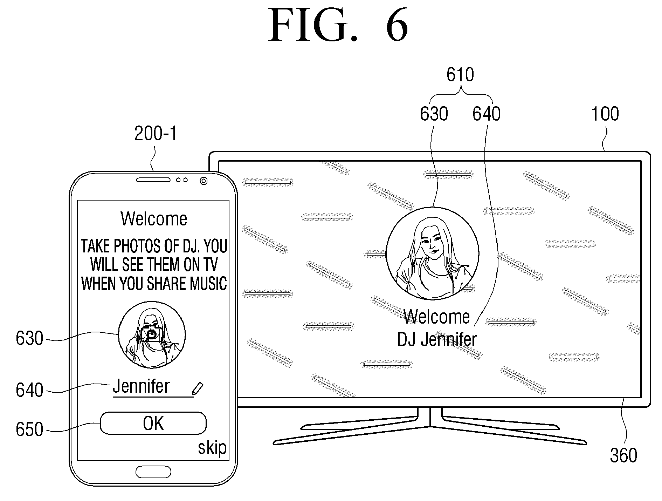

If the displayed PIN number 510 is input to a mobile device and received by the display device 100, the display device 100 may establish a connection. The processor may control the display portion 360 to display identification information for identifying the connected mobile device 200-1, as shown in FIG. 6. The identification information may include a name of the connected mobile device 200-1 and a user title that may be input by the user, and may include graphic information, such as illustrations, pictures, etc., and a combination 630 thereof.

For example, the processor 390 may control the display portion 360 to display a user title "Jennifer" 640 and a photo 630 that are set by a user of the mobile device 200-1 connected to the display device 100. Thus, the processor 390 may provide the identification information to allow the user to identify the connected mobile device 200-1.

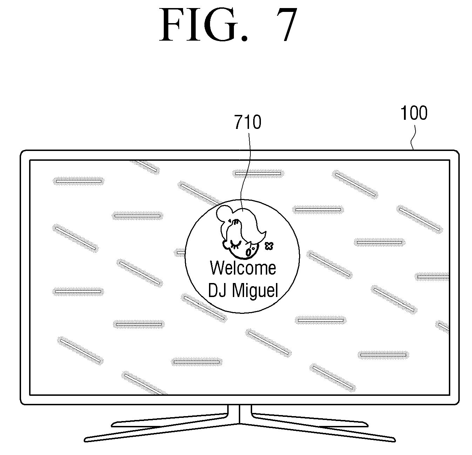

In this regard, the identification information for identifying the connected mobile device 200-1 may be text, icons, images, video, audio, or a combination thereof. In more detail, identification information 610 and 710 may be displayed as a combination of a photo and text as shown in FIG. 6 or a combination of an icon and text as shown in FIG. 7, and may be output as audio.

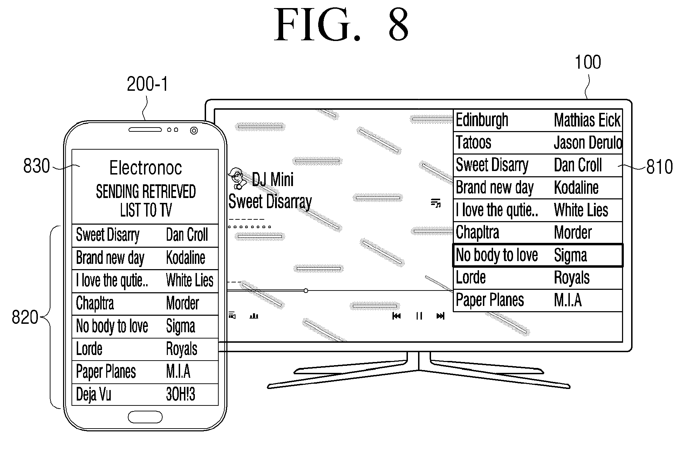

If the mobile device 200-1 is connected to the display device 100 using the above described method, as shown in FIG. 8, the processor 390 may control the communication portion 310 to receive information 820 regarding music contents selected by a user input. In this regard, the music contents received from the mobile device 200-1 may include not only music contents stored in the mobile device 200-1, but also music contents stored in a cloud server connected to the mobile device 200-1, and music contents stored in an external server. In particular, when the received music contents are stored in the mobile device 200-1, the processor 390 may receive not only the information regarding the music contents, but also data of the music contents from the mobile device 200-1. When the received music contents are stored in the cloud server or the external server, the processor 390 may receive address information of the cloud server or the external server from the mobile device 200-1 as the information regarding the music contents. The processor 390 may control the display portion 360 to display a list 810 including the received music contents based on the received information regarding the music contents.

The list 810 may include at least one of a title of the received music contents, a singer, an album name, and information regarding the mobile device 200-1 that transmits the music contents. The information regarding the mobile device 200-1 transmitting the information regarding the music contents included in the list 810 may include a name of the mobile device 200-1 or a user title set by the user. If a command to edit the list 810 is input by the user during reproduction of the music contents, the processor 390 may control the display portion 360 to display the list 810 in a semitransparent form.

The mobile device 200-1 may display an interface 830 indicating a status of the mobile device 200-1. If a user command to edit the list 810 is input from the mobile device 200-1, the processor 390 may control the display portion 360 to edit and display the list 810 according to the user command. For example, if a user command to delete "Nobody to love" from the list 810 is input from the mobile device 200-1, the processor 390 may control the display portion 360 to delete "Nobody to love" from the list 810 and display the list 810 according to the user command.

The list 810 of FIG. 8 includes the title of the music contents and the singer, but this is merely an example. The list 810 may further identify the mobile device 200-1 that transmits the music contents, the album name, the genre, etc.

The list 810 of FIG. 8 may include only the music contents stored in the mobile device 200-1, but this is merely an example. The list of FIG. 8 may include the music contents stored in the cloud server connected to the mobile device 200-1, the music contents stored in the external server, etc. In this regard, when the music contents stored in the cloud server or the external server are displayed, the list 810 may display address information of the cloud server or the external server.

FIG. 8 is a diagram for describing the music contents according to an exemplary embodiment. However, contents that may be transmitted from the mobile device 200-1 are not limited to the music contents. In more detail, the processor 390 may receive image contents from the mobile device 200-1. If information regarding the image contents is received from the mobile device 200-1, the processor 390 may control the display portion 360 to display a list including the image contents received from the mobile device 200-1 based on the information regarding the image contents received from the mobile device 200-1.

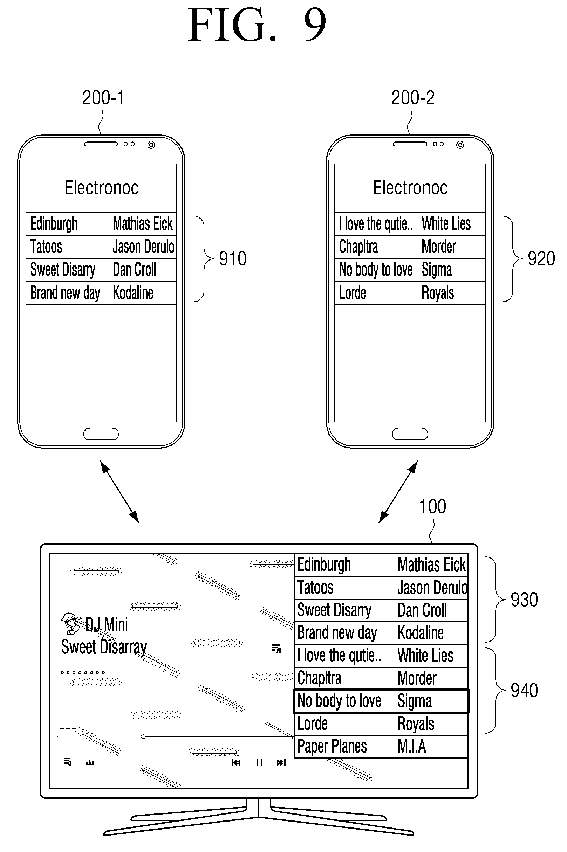

FIG. 9 illustrates the display device 100 that receives information regarding music contents from the plurality of mobile devices 200-1 and 200-2 according to an exemplary embodiment.

The processor 150 may control the communication portion 310 to receive information regarding music contents from each of the first mobile device 200-1 and the second mobile device 200-2. The processor 390 may control the display portion 360 to unify the information regarding the music contents received from the first mobile device 200-1 and the second mobile device 200-2 and display a list.

For example, if the first mobile device 200-1 transmits information 910 regarding Edinburgh (Mathias Eick), Tatoos (Jason Derulo), Sweet Disarry (Dan Croll), and Brand new day (Kodaline) that are music contents, and the second mobile device 200-2 transmits information 920 regarding I love the qutie..(White Lies), Chapltra (Morder), Nobody to love (Sigma), and Lorde (Royals) that are music contents, the processor 390 may control the communication portion 310 to receive information 910 and 920 regarding Edinburgh (Mathias Eick), Tatoos (Jason Derulo), Sweet Disarry (Dan Croll), and Brand new day (Kodaline) and information 920 regarding I love the qutie..(White Lies), Chapltra (Morder), Nobody to love (Sigma), and Lorde (Royals).

The processor 390 may control the display portion 360 to unify information 910 including Edinburgh (Mathias Eick), Tatoos (Jason Derulo), Sweet Disarry (Dan Croll), and Brand new day (Kodaline) into information 930, and information 920 received from the first mobile device 200-1 and I love the qutie..(White Lies), Chapltra (Morder), Nobody to love (Sigma), and Lorde (Royals) into information 940 and display a list including information 930 and 940. In the present exemplary embodiment, the music contents may be aligned in order of the mobile devices 200-1 and 200-2 but this is merely an example. The music contents may be aligned in alphabetical order of titles or in alphabetical order of singers and may be aligned as designated by the user.

If the information 910 regarding the music contents transmitted by the first mobile device 200-1 and the information 920 regarding the music contents transmitted by the second mobile device 200-2 are redundant, the processor 390 may exclude the redundant music contents.

As a result, information 930 regarding the music contents received from the first mobile device 200-1 and information 940 regarding the music contents received from the second mobile device 200-2 may be displayed on a list. The processor 390 may display the music contents received from the plurality of mobile devices 200-1 and 200-2 as a list, and thus a display device may provide music contents to which users of the plurality of mobile devices 200-1 and 200-2 desire to listen.

If a user command for reproducing the music contents included in the list is input, the processor 390 may reproduce the music contents included in the list. In this regard, the processor 390 may reproduce the music contents by using audio data of the music contents received from the mobile devices 200-1 and 200-2. Alternatively, the processor 390 may use the information regarding the music contents received from the mobile devices 200-1 and 200-2 (for example, URL information, etc.) to receive the audio data of the music contents through an external cloud server or a storage a device, and reproduce the music contents.

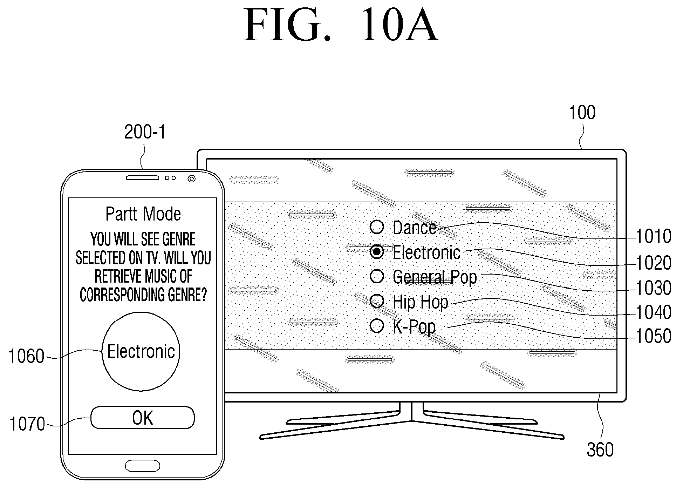

As shown in FIG. 10A, the processor 390 may control the display portion 360 to display a mode selection UI. For example, the mode selection UI may include a Dance mode 1010, an Electronic mode 1020, a General mode 1030, a Hip Hop mode 1040, and a K-pop mode 1050. If a user command selecting the Electronic mode 1020 is input, the processor 390 may control the communication portion 310 to transmit a signal requesting information regarding music contents corresponding to the Electronic mode 1020 to a mobile device. If the signal requesting the information regarding the music contents corresponding to the Electronic mode 1020 is received, the mobile device 200-1 may indicate the requested mode 1060 and an accept interface 1060. When accepted, the mobile device 200-1 may recommend the music contents corresponding to the Electronic mode 1020.

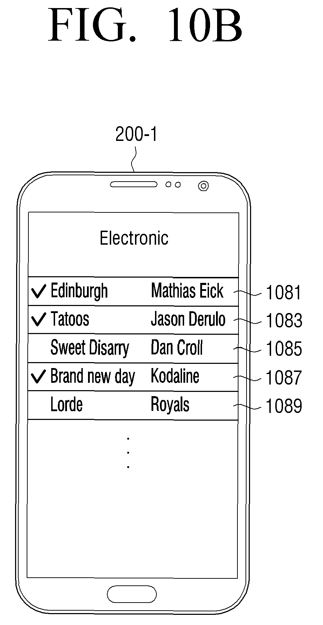

If a command recommending the music contents corresponding to the Electronic mode 1020 is input, as shown in FIG. 10B, the mobile device 200-1 may display the music contents corresponding to the Electronic mode 1020. Various music contents of the selected mode 1081-1089 may be displayed and checked by the user. Checking and displaying the music contents corresponding to the Electronic mode 1020 are merely an example. The mobile device 200-1 may variously display the music contents by highlighting and displaying the corresponding music contents.

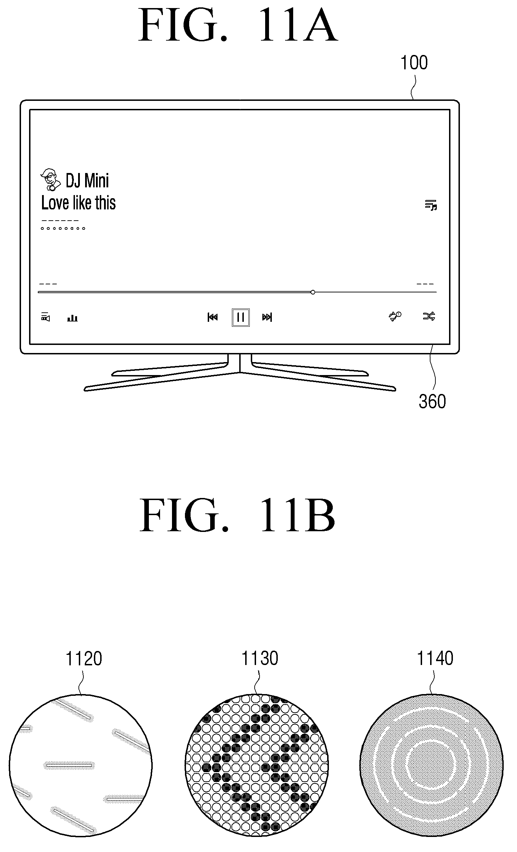

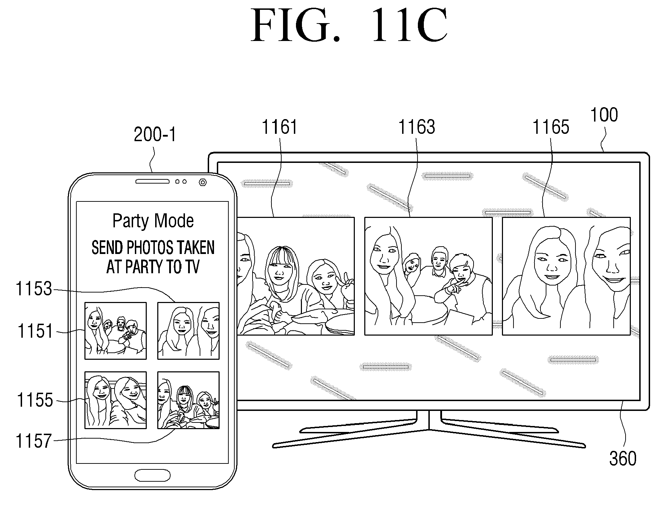

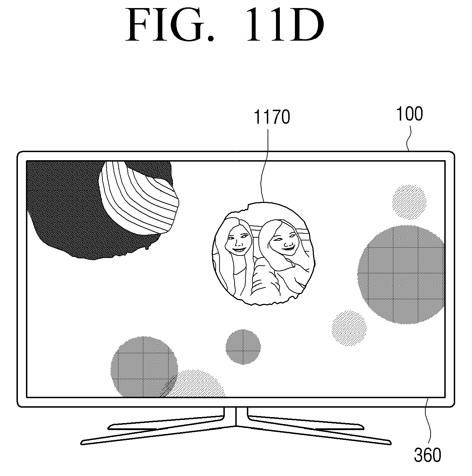

A method of reproducing the music contents based on the information regarding the music contents received from the plurality of mobile devices 200 according to an exemplary embodiment will be described with reference to FIGS. 11A, 11B, 11C and 11D.

FIG. 11A illustrates reproducing the music contents according to an exemplary embodiment. While the audio output portion 380 reproduces the music contents, if a user command to edit a list is input by a user through the mobile device 200, the processor 390 may control the display portion 360 to update and display the list according to the input user command. More specifically, if a command to add or delete music contents is received through the mobile device 200 during reproduction of the music contents, the processor 390 may control the display portion 360 to update and display the list by adding or deleting the music contents corresponding to the received add or delete command.

If a signal requesting a communication connection of a new mobile device is received while the audio output portion 380 reproduces the music contents, the processor 390 may control the display portion 360 to display a guide UI in a pop up form.

If a reproduction error occurs while the audio output portion 380 reproduces the music contents, the processor 390 may determine whether the reproduction error is a communication error of the mobile device 200 that transmits the music contents in which the reproduction error occurs or is a reproduction error caused by corruption of the corresponding music contents. If the reproduction error is the communication error of the mobile device 200, the processor 390 may control the audio output portion 380 to delete all the music contents received from the mobile device 200 that transmits the music contents in which the reproduction error occurs from the list, and reproduce the music contents received from another normally corrected mobile device 200. If the reproduction error is the reproduction error caused by corruption of the corresponding music contents, the processor 390 may control the audio output portion 380 to reproduce subsequent music contents.

If the reproduction error occurs during reproduction of the music contents, the processor 390 deletes the music contents in which the reproduction error occurs from the list in the above-described exemplary embodiment but this is merely an example. According to various exemplary embodiments, the processor 390 may not delete the music contents in which the reproduction error occurs from the list and reproduce music contents by skipping the music contents in which the reproduction error occurs. In this regard, the processor 390 may control the display portion 360 to separately identify the music contents in which the reproduction error occurs. For example, the processor 390 may control the display portion 360 to display the music contents in which the reproduction error occurs more faintly than other music contents.

When a cause of the reproduction error is resolved, i.e., when communication with the mobile device 200 is recovered or the music contents are recovered, the processor 390 may control the display portion 360 to restore the previously removed music content to the list. For example, when the music contents are deleted and subsequently restored, the processor 390 may subsequently add the deleted music contents to the list, and, when the music contents are displayed faintly, may control the display portion 360 to subsequently display the faintly displayed music contents at the same brightness as that of other music contents.

As shown in FIGS. 11B, 11C and 11D, while the audio output portion 390 reproduces the music contents, the processor 390 may control the display portion 360 to simultaneously display a screen corresponding to the music contents. The screen corresponding to the music contents may be an equalizer screen.

Referring to FIG. 11B, the screen corresponding to the displayed music contents may have various forms 1120, 1130, and 1140. The form of the screen may be determined according to a genre of the music contents being reproduced, a tempo, etc. As shown in FIG. 11D, the processor 390 may control the display portion 360 to edit a photo 1170 received from the mobile device 200 and display the screen in the determined form corresponding to the music contents. While the audio output portion 380 reproduces the music contents, the processor 390 may control the display portion 360 to display the screen corresponding to the music contents, thereby providing a user with a visual effect and creating interest, and thus usage of the display device 100 may increase and may be expanded to not only auditory senses, but also other senses, such as visual senses.

FIG. 11C illustrates the processor 390 controlling the communication portion 310 to receive information regarding image contents 1151-1157 from the mobile device 200-1 connected to the display device 100 and displaying corresponding content images 1161-1165 on the display, according to an exemplary embodiment. The image contents are merely an example. The processor 390 may control the communication portion 310 to receive information regarding various contents such as video, etc.

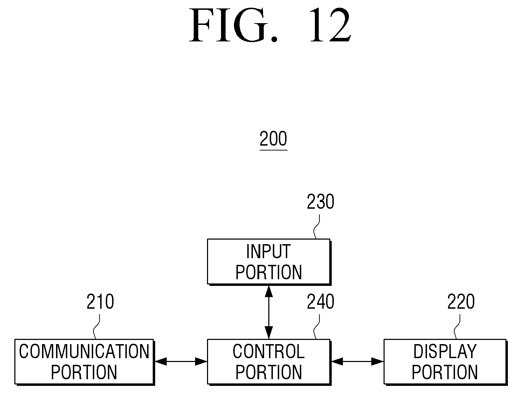

FIG. 12 is a block diagram of a configuration of the mobile device 200, according to an exemplary embodiment. As shown in FIG. 12, the mobile device 200 may include a communication portion 210, a display portion 220, an input portion 230, and a control portion 240.

The communication portion 210 may communicate with the display portion 100. In particular, the communication portion 210 may communicate with the mobile device 200 by using a WiFi communication method and by using various wireless communication methods such as a Bluetooth communication method, a Zigbee communication method, an infrared communication method, a DLNA, an airplay communication method, IEEE, 3G, 3GPP, LTE, BLE, etc.

The communication portion 210 may use the above-described communication method to transmit a signal requesting communication connection to the display device 100 and transmit information regarding music contents according to a user command. The communication portion 210 may transmit a signal with respect to a user command for editing a list displayed on the display device 10 to the display device 100. The communication portion 210 may receive information regarding a mode of the display device 100 from the display device 100. The control portion 230 may control the display portion 220 to display recommendation music contents corresponding to the received mode of the display device 100.

The display portion 220 may output image data according to a command of the control portion 240. In particular, the display portion 220 may display a phrase requesting input of a PIN number displayed on the display device 100 to establish a connection with the display device 100 and may display a phrase "connecting another device" while the other mobile device 200 is performing communication connection.

The input portion 230 may receive a user command for connecting the mobile device 200 to the display device 100. The input portion 230 may receive a user command for transmitting information regarding the music contents to the display device 100. In particular, the input portion 230 may receive a user command to transmit the information regarding the music contents from the mobile device 200 to the display device 100 and may receive an edit command for editing the list displayed on the display device 100.

The control portion 240 may control an operation of the display device 100 according to the signal received through the communication portion 210 and the user command input through the input portion 230. In particular, if a command requesting communication connection is input by the user through the input portion 230, the control portion 240 may control the communication portion 210 to transmit a signal requesting communication connection to the display device 100.

The control portion 240 may control the display portion 220 to display the phrase requesting input of the PIN number displayed on the display device 100 for communication connection. If a command to transmit information regarding the music contents is input by the user through the input portion 230, the control portion 240 of the connected mobile device 240 may control the communication portion 210 to transmit the information regarding the music contents to the display device 100.

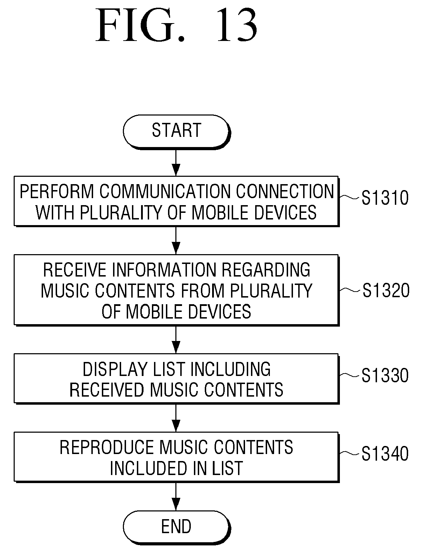

A method of controlling the display device 100 to receive information regarding music contents from a plurality of mobile devices and reproducing the music contents according to another exemplary embodiment will now be described with reference to FIG. 13 below.

The display device 100 may establish a connection of the display device 100 and the plurality of mobile devices (S1310). More specifically, the display device 100 may display a guide UI guiding a method of connecting the display device 100 and the plurality of mobile devices 200. If a signal requesting communication connection is received from the mobile device 200 through the communication portion 110, the display device 100 may display a PIN number for communication connection one by one. If the PIN number is input to the mobile device 200, the display device 100 may establish a communication connection. The display device 100 may display identification information for identifying the connected mobile device 200. In this regard, the identification information may be a name of the mobile device 200 and a user title that may be input by the user.

The display device 100 may receive information regarding the music contents from the plurality of mobile devices 200 (S1320). In this regard, the information regarding the music contents may include a title of the music contents, a singer, an album name, lyrics, address information for reproducing the music contents (for example, URL information, etc.), etc. More specifically, the display device 100 may reproduce the music contents through an external storage device or an external server, such as a cloud server, by using the information regarding the music contents. In an exemplary embodiment, the display device 100 may receive audio data of the music contents along with the information regarding the music contents from the mobile device 200.

The display device 100 may display a list including the received music contents (S1330). More specifically, the display device 100 may generate and display the list including the received music contents based on the information regarding the music contents received from the plurality of connected mobile devices 200.

The display device 100 may reproduce the music contents included in the generated list (S1340). The display device 100 may reproduce the music contents and simultaneously display a screen corresponding to the music contents based on the information regarding the music contents. The screen corresponding to the music contents may be differently provided according to a characteristic such as a genre of the corresponding music contents, a tempo, etc.

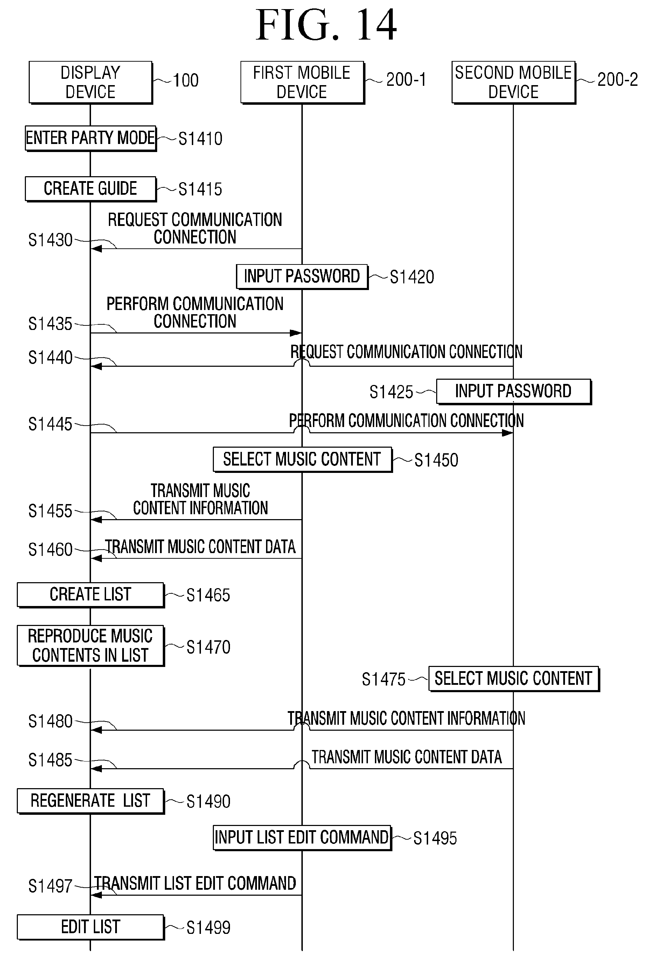

FIG. 14 is a sequence diagram for describing a method of controlling the display device 100, according to another exemplary embodiment.

The display device 100 may enter a party mode according to a user command (S1410). When there is no connected mobile device during the party mode, the display device 100 may generate and display a guide UI guiding a method of connecting the display device 100 and a mobile device (S1415).

If the display device 100 receives a signal requesting communication connection from the first mobile device 200-1 (S1430), the display device 100 may display a PIN number for performing communication connection one by one. If the PIN number is input to the first mobile device 200-1 (S1420), the display device 100 may establish a communication connection (S1435). In the same manner, by requesting communication connection S1440 and receiving input of a displayed PIN number S1425, the display device 100 may establish a communication connection with the second mobile device 200-2 (S1445).

The first mobile device 200-1 may receive a user input selecting music content S1450. The display device 100 may receive information regarding music contents from the first mobile device 200-1 (S1455). The display device 100 may receive audio data of the music contents along with the information regarding the music contents from the first mobile device 200-1 (S1460).

The display device 100 may generate a list including the received music contents based on the information regarding the music contents received from the first mobile device 200-1 (S1465). The display device 100 may reproduce the music contents included in the generated list (operation S1470). The display device 100 may receive and reproduce the audio data of the music contents from the first mobile device 200-1 and may reproduce the music contents through an external server by using the information regarding the music contents. The display device 100 may reproduce the music contents and simultaneously display a screen corresponding to the music contents according to a characteristic such as a genre of the music contents, a tempo, etc.

During reproduction of the music contents, the display device 100 may receive the information regarding music contents and audio data of music contents from the second mobile device 200-2 (S1480 and S1485). The display device 100 may update the generated list based on the information regarding the music contents received from the second mobile device 200-2 (S1490). If a list edit command is input by a user through the first mobile device 200-1 (S1495), the first mobile device 200-1 may transmit the list edit command to the display device 100 (S1497), and the display device 100 may edit and update the list (S1499).

The method of controlling the display device 100 according to the above-described exemplary embodiments may be implemented as a computer program and may be provided to the display device 100.

The non-transitory computer readable recording media refers to media in which data can be stored semi-permanently and is readable by a device, and not a medium which stores data for a short period of time such as a register or cache. More specifically, the aforementioned various applications or programs may be stored in and provided by non-transitory computer readable recording medium such as a CD, DVD, hard disk, blue ray disk, USB, memory card, and ROM, etc.

While exemplary embodiments of this invention have been illustrated and described, it will be understood by those skilled in the art that various changes in form and details may be made therein without departing from the spirit and scope of the invention as defined by the appended claims. Therefore, the scope of the invention is defined not by the detailed description of exemplary embodiments, but by the appended claims, and all differences within the scope will be construed as being included in the present disclosure.

## Claims

1. A method of controlling a display device, the method comprising:
establishing a communication connection with a plurality of mobile devices;
if the communication connection with the plurality of mobile devices is established, receiving information regarding contents from the plurality of mobile devices;
generating and displaying a list including the contents received from the plurality of mobile devices based on the information received from the plurality of mobile devices; and
reproducing the contents included in the list.

2. The method as claimed in claim 1, wherein the information regarding the contents includes information regarding music contents.

3. The method as claimed in claim 1 or 2, wherein the establishing the communication connection with the plurality of mobile devices includes:
the display device displaying a PIN number; and
if the PIN number displayed on the display device is input to a mobile device, establishing the communication connection with the mobile device to which the PIN number is input.

4. The method as claimed in claim 2 or 3, wherein the reproducing of the music contents includes: when reproduction of the music contents is impossible due to a communication connection error of the mobile device, reproducing subsequent music contents and deleting music contents received from the mobile device having the communication connection error from the list.

5. The method as claimed in any one of claims 1 to 4, wherein the establishing the communication connection further includes: when at least one of the plurality of mobile device is connected, displaying a GUI corresponding to the connected mobile device, and
wherein the GUI includes at least one of text, an icon, a picture, and a photo.

6. The method as claimed in any one of claims 2 to 5, wherein the list includes at least one of a title of the music contents, a singer, an album name, and information of the mobile device that transmits the music contents.

7. The method as claimed in any one of claims 2 to 6, wherein the reproducing further includes: displaying a screen corresponding to music contents being reproduced.

8. The method as claimed in any one of claims 2 to 7, further comprising: if an edit command of the music contents is received during reproduction of music contents included in the list, updating the list according to the edit command.

9. The method as claimed in any one of claims 1 to 8, further comprising: if a user command to set a mode is input, transmitting information regarding the set mode to the plurality of mobile devices,
wherein the plurality of mobile devices displays recommendation contents based on the information regarding the set mode.

10. The method as claimed in any one of claims 1 to 9, further comprising: if an additional mobile device is connected during reproduction of the contents, displaying a guide UI in a pop up form.

11. A display device comprising:
a communication portion for communicating with a plurality of mobile devices;
a display portion for displaying an image;
an audio output portion for outputting audio; and
a processor for, if a communication connection is established with the plurality of mobile devices, controlling the communication portion to receive information regarding contents from the plurality of mobile devices, controlling the display portion to display a list including a plurality of pieces of contents received from the plurality of mobile devices based on the information received from the plurality of mobile devices; and controlling the audio output portion to reproduce the plurality of pieces of contents included in the list.

12. The display device as claimed in claim 11, wherein the information regarding the contents includes information regarding music contents.

13. The display device as claimed in claim 11 or 12, wherein the processor controls the display portion to allow the display device to display a PIN number, and, if the PIN number displayed on the display device is input to a mobile device, controls the communication portion to establish a communication connection with the mobile device to which the PIN number is input.

14. The display device as claimed in claim 11 or 13, wherein the processor, when reproduction of the music contents is impossible due to a communication connection error of a mobile device, reproduces subsequent music contents of the list and controls the display portion to display the list by deleting music contents received from the mobile device having the communication connection error from the list.

15. The display device as claimed in any one of claims 11 to 14, wherein the processor, when at least one of the plurality of mobile device is connected, controls the display portion to display a GUI corresponding to the connected mobile device, and
wherein the GUI includes at least one of text, an icon, a picture, and a photo.
